Europäisches Patentamt

**(19)** European Patent Office

Office européen des brevets

**(11)** Publication number : **0 471 779 B1**

**(12)** EUROPEAN PATENT SPECIFICATION

**(45)** Date of publication of patent specification :
19.07.95 Bulletin 95/29

**(51)** Int. Cl.⁶ : **H01B 7/28**

**(21)** Application number : **90908352.9**

**(22)** Date of filing : **09.05.90**

**(86)** International application number :
**PCT/US90/02597**

**(87)** International publication number :
**WO 90/13901 15.11.90 Gazette 90/26**

**(54) APPARATUS AND METHOD FOR THE REDUCTION OF POLYOLEFIN INSULATION CRACKING OF CABLES.**

Divisional application 94203503.1 filed on 09/05/90.

**(30)** Priority : **10.05.89 US 350657**
**10.10.89 US 419408**

**(43)** Date of publication of application :
**26.02.92 Bulletin 92/09**

**(45)** Publication of the grant of the patent :
**19.07.95 Bulletin 95/29**

**(84)** Designated Contracting States :
**AT BE CH DE DK ES FR GB IT LI NL SE**

**(56)** References cited :
**DE-A- 3 017 442**
**US-A- 4 399 602**
**Database Derwent World Patent Index, AN 82-88661E, & JP, A, 57145136 (Furukawa) 8 September 1982**

**(73)** Proprietor : **RAYCHEM CORPORATION**
**300 Constitution Drive**
**Menlo Park California 94025 (US)**

**(72)** Inventor : **DAWES, Keith**
**7508 Wingsfoot Drive**
**Raleigh, NC 27615 (US)**
Inventor : **HUNTER, Thomas, A.**
**1203 17th Avenue South, Apt. 1**
**Nashville, TN 37212 (US)**
Inventor : **HOLT, Neil, L.**
**1548 Maple Street, No. 25**
**Redwood City, CA 94063 (US)**

**(74)** Representative : **Benson, John Everett et al**
**Raychem Limited**
**Intellectual Property Law Department**
**Faraday Road**
**Dorcan**
**Swindon, Wiltshire SN3 5HH (GB)**

## Description

This is a continuation-in-part application of U.S. Serial No. 07/350,657 filed May 10, 1989, the filing date benefit of which is claimed and the specification is incorporated herein by reference.

## Field of the Invention

This invention relates to methods, articles and materials for preventing oxidative degradation (deterioration) of antioxidant containing polyolefin insulation on electrical conductors such as telephone cables and electric power cables.

## Background of the Invention

Conventionally, to protect polyolefins, such as polyethylene, polypropylene and their various copolymers, it is known in the plastics industry to add antioxidant material during manufacture or processing of the polyolefin resin. The material often consists of mixture of additives each of which may inhibit oxidation of the resin in similar or in different ways. These antioxidant material(s) prevent degradation of the resin during, for example, high temperature extrusion of the insulation over a wire conductor to form the insulated wire. These antioxidant (also known as stabilizer) material(s) also help prevent cracking and peeling of the insulation, and other ill effects, during the service life of the insulated wire and/or cable. Such degradation can occur as a result of long exposure to the atmosphere even at relatively modestly elevated temperatures of 40° to 90°C. The most commonly used antioxidant materials include phenolic type antioxidants (often called primary antioxidants), which are often combined with a peroxide decomposer (a so-called synergist or secondary antioxidant). These materials, if used, each typically comprise about 0.1% by weight of the insulation.

In more recent years, it has been discovered that the copper conductor in many cables has a catalytic effect on the oxidation process that thereby promotes premature depletion of the antioxidant composition. To counter this effect, so called metal deactivators (often designed to counter the specific effect of copper catalysis) are now frequently added to the polyolefin resin during manufacture. Also, the color pigments in many cables often have a catalytic effect on the oxidation that promotes degradation (as evidenced by embrittlement and cracking or peeling of the insulation).

For these and other reasons, many cables, particularly those sections placed in telephone pedestal and aerial enclosures, have been found to deteriorate in service at a considerably more rapid rate than originally anticipated. An excellent review of the historical development of this problem is contained is "Cracking of Foam-skin Polyethylene Insulations in Pedestals" by T. N. Bowmer, International Wire and Cable Symposium Proceedings 1988, Pages 475 to 485. In the Introductory section of this paper, it is stated (reference numbers have been omitted):

"In the 1960-70s, catastrophic cracking occurred in low density polyethylene (LDPE) insulations. Such deterioration occurred in as little as 3-4 years in the southwestern United States. Extensive work showed that not only was stabilizer loss and oxidation accelerated by high temperatures, but also the copper conductor catalyzed the oxidation. Consequently, the insulation material was changed to high density polyethylene (HDPE), a less volatile antioxidant was used and a metal deactivator added. The procedures developed during this time for oxidative testing of insulated wires and polyolefin compositions form the basis of the stability requirements for today's cables.

Concomitant with these material changes, water resistant PIC cable was introduced into the buried plant environment in 1972. This involved filling the cable with a waxy hydrocarbon material. Polypropylene (PP) insulations were initially used in these cable, but were found to suffer premature embrittlement and failure also and were replaced by a foam-skin HDPE design in 1976 that incorporated an inner coating of foamed HDPE with an outer coating of solid HDPE. These insulations were expected, from previous research, to last greater than 40 years in the pedestal environment without trouble, although some accelerated testing results predicted only a 10-15 year lifetime.

Foam-skin HPPE insulation placed in service in 1976-80, have begun to crack in closures in southern Arizona and New Mexico. There have even been reports of cracking in cables of later vintage in Phoenix. The concern is that such failures are again caused by stabilizer depletion. Based on the LDPE experience, the southwest is a harbinger on what can be expected in the rest of the country, since the high temperatures and long summers of the southwest greatly accelerate thermal oxidation and stabilizer loss inside pedestal closures. Those concerns are further magnified by the quantities of foam-skin insulations that have accumulated in the field over the last 12 years."

On page 482 the Bowmer reference further indicates that antioxidant booster sprays and pucks (that is, puck shaped resin objects that contain of the order of 5% of a somewhat volatile antioxidant composition) have been placed in pedestals in attempts to increase the service life of installed at risk cables. It notes that the best repair, short of replacement, for the cables at risk consists of an internal airtight closure that minimizes oxygen infiltration and stabilizer evaporation.

Thus, the problem of wire insulation embrittlement, cracking and peeling, especially when placed in pedestal enclosures has persisted since at least the mid 1960's despite numerous attempts at solutions of the problem and several changes in the approved telephone cable insulation materials and constructions, the purpose of these changes inter alia being to overcome this problem.

US-A-4399602 discloses the use of an enclosure to surround a cable splice in a telecommunications cable insulated with polyethylene.

Derwent abstract WP1 AN 82-88661E of JP-A-57145136 discloses a homogeneous polyolefin insulating composition which is stated to be non corrosive. The composition contains various additives such as zinc oxide and antioxidant.

Summary of the Invention

We have found that even when these cable insulations are surrounded by airtight enclosures, such as a heat shrinkable cable splice or bolt together cable splice protectors, degradation of the wire and/or cable insulation still occurs. We have further unexpectedly discovered that this surprising result is the result of a hitherto unrecognized interaction between certain components of the pedestal or aerial closure environment and one or more of the stabilizer components present in the insulation. This interaction we believe results in the direct degradation of one or more of the antioxidant components. We have found that this interaction does proceed even in an atmosphere substantially devoid of oxygen indicating that the said degradation is non-oxidative. Briefly, we have unexpectedly and surprisingly discovered that acidic emanations from certain closure materials occurs at ambient temperature from, for example, the enclosure for cable splices or other components within the enclosure, the splice connections or even in the spliced area of the cable, interact with one or more components of the antioxidant compositions used in insulated telephone conductors such that the effectiveness of the said one or more components of the antioxidant composition is substantially destroyed.

According to one aspect of the present invention there is provided a method for preventing degradation of polyolefin wire insulation (1a, 1b, 12, 50, 52, 80, 89) in a cable splice which comprises:
surrounding a cable splice (2) with an enclosure (100, 200, 300, 450) characterised in that the method further provides
an acid scavenger (6,16,16a, 66, 66a, 96) separate from but in communication with the insulation; and
optionally sealing the enclosure (100, 200, 300, 450) around the cable splice 2.

According to a further aspect of the present invention there is provided an apparatus (100, 200, 300, 400) for enclosing insulated polyolefin wires of a cable splice (2) having therein an acid scavenger (6, 16, 16a, 96) to retard polyolefin wire insulation degradation, which when the apparatus is used to enclose insulated polyolefin wires is separate from but in communication with the polyolefin insulation.

According to a still further aspect of the invention there is provided a kit-of-parts for enclosing insulated polyolefin wires in a cable splice comprising:
a splice enclosure (100, 200, 300, 400); characterised by further providing
an acid scavenger (6, 16,16a, 66, 66a, 96) to inhibit the degradation of the polyolefin wire insulation by degrading acid moities which when the kit is used to enclose insulated polyolefin wires is separate from but in communication with the polyolefin insulation.

Optionally, the article also comprises antioxidant material, alone or in combination with dessicants and/or oxygen scavengers, to increase the oxygen induction time of the wire insulation.

Brief Description of the Drawings

Figure 1 illustrates a cross-sectional view of a spliced cable surrounded by an airtight enclosure incorporating embodiments of the invention.

Figure 2 illustrates a cross-sectional view of an end cap illustrating several embodiments of the invention.

Figure 3 illustrates an aerial closure for a telecommunications splice including drop wires incorporating embodiments of the invention.

Figure 4 illustrates a side elevational view partially in cross-section of a pedestal cap incorporating embodiments of the invention.

Figure 5 illustrates a top view of a sheet suitable for forming an enclosure bag which includes embodiments of the invention associated with, e.g., absorbed or adsorbed on, a containing media.

Figure 6 illustrates cross-sectional view of two sheets according to Figure 5 bonded together to form an enclosure, e.g., a bag, to surround a polyolefin wire or cable.

Detailed Description of the Invention

This invention involves, among other factors, the surprisingly unexpected observation that acidic vapors such as HCl, acetic acid, and the like, and volatile materials from cross-linked elastomers and plastics within the enclosure especially those from the degradation of halogenated plastic materials such as polyvinyl chloride significantly reduces the effectiveness of the stabilizers of the polyolefin such as polyethylene wire sheath even at ambient temperatures, e.g., daylight temperatures, to cause or permit the cracking of the insulation and premature degradation of the wire insulation. In addition, the copper core apparently enhances this degradation process.

The rate of this process can be markedly reduced by incorporating an acid/volatile component scavenger into the enclosure either through an aerosol, a laminate within the closure skin, a material with the scavenger adsorbed or absorbed thereon, e.g., felt, or a block of material containing an acid scavenger and the like, to prevent acid/volatile vapor attack on the insulated cable, e.g., polyethylene insulation. Suitable enclosures are made of polyolefin material such as polyethylene or polypropylene, and the like, with butyl tape and/or metal containers with nonhalogenated sealing gaskets or other sealing material which produce volatile degradative vapors.

More specifically, halogenated polymers such as polyvinyl chloride (PVC) provide the largest source of acidic degradation by-products, e.g., HCl. PVC is used in many telephone applications such as dropwire insulations, tapes, splice wraps, and closure housings. Literature shows that HCl is a degradation product during long term ambient cyclic heating and ultraviolet radiation exposure. Other sources of volatile degradation products are Silicone RTV®, Polychloroprene (neoprene), epichlorohydrin polyvinyldene-chloride. Other materials which affect the cable lifetime include sulfur and peroxide cured materials such as EPDM rubber, EPR rubber, SBR rubber, isoprene rubber, nitrile rubber, and like plastics.

The scavenger materials for both acids and volatile components are referred to for convenience as acid scavengers. The acid scavengers have a sufficiently high surface area, or reactive sites, to absorb, adsorb, or neutralize the deleterious materials produced within the enclosure from degradation, e.g., UV and/or thermal cycling, a low human toxicity, and are unreactive with the wire insulation or the closure system. A single acid scavenger or mixtures thereof can be used. Suitable acid scavengers are selected from metallic oxides, carbonates, hydroxides, amines, stearates, phosphites, sulphates, phosphates, and the like which do not adversely react with the wire insulation or the closure and seals while absorbing, adsorbing, or neutralizing any acid vapors or binding the reactive sites of any volatile degradation substituents from the closure materials. Preferred materials are listed in Table I:

```
                    Table I
                Acid Scavengers

            Zinc oxide
            Calcium oxide (lime)
            Dibasic lead phthalate
            Sodium carbonate
            Calcium carbonate
            Sodium hydroxide (Ascarite®)
            Sodium bicarbonate
            Calcium hydroxide
            Ammonia; amines
            Epoxy compounds
               (epoxidized soybean oil)
            Barium, cadmium, zinc stearates
               (or other carboxylates)
            Dibasic lead phosphite
            Tribasic lead sulphate
            Sodium phosphate
            Dialkyl tindichloride
```

Of these acid scavengers, those having a pH greater than about 5, i.e., more alkaline, are particularly preferred materials and can be selected from the group listed in Table II:

```
                    Table II
             Preferred Acid Scavengers

             Sodium carbonate
                and/or hydrates thereof
             Calcium carbonate
             Sodium bicarbonate
             Calcium oxide
             Calcium hydroxide
             Zinc oxide
```

These acid scavengers may also be beneficially associated either in a separate means or together with antioxidants, such as one or more of the compounds listed in Table III:

Table III
Antioxidants

Vanox GT®; R.T. Vanderbilt Co. Tris
(3,5-di-tert-butyl-4-hydroxybenzyl)isocyanurate

Irganox® 1010; Ciba-Giegy Corp. Tetrakis [(methylene
3(3',5'-di-t-butyl-4'-hydroxyphenyl)] propionate methane

Irganox® 1076; Ciba-Giegy Corp. Octadecyl
3-(3',5',-di-tert-butyl-4'-hydroxyphenyl) propionate

Santonox R®; Monsanto Corp.
4,4' thiobis-(6-tert-butyl meta cresol)

Santowhite Powder®, Monsanto Corp. 4,4'-butylidene bis
(6-tert-butyl meta cresol)

Ethanox® 330, Ethyl Corp. 1,3,5-trimethyl-2,4,6-tris
(3,5,-di-tert-butyl-4-hydroxy
    benzyl) benzene

Vanox® 1290, R.T. Vanderbilt Co., Inc. 2,2'-Ethylidene-bis
(4,6-di-tert-butyl phenol)

Ultranox® 246, Borg-Warner Chemicals
2,2'-methylene-bis-(4-methyl-6-tert-butyl phenol)

Naugard® 445, Uniroyal Chemical Company, Inc. 4,4' Di
(alpha,alpha-dimethylbenzyl)diphenylamine

Mixxim® AO-30, Fairmount Chemical Co., Inc. 1,1,3-tris(2
methyl)-4-hydroxy-5-tert-butylphenyl butane

Cyanox® 425, American Cyanamid Co. 2,2' Methylene
bis(4-ethyl-6-tert-butyl phenol)

Ethanox® 702, Ethyl Corp.
4,4'-methylene-bis-(2,6-di-tert-butylphenol)

Naugard® 451, Uniroyal Chemical Company Inc.
Proprietary alkylated hyrdroquinone

Of these antioxidants, those particularly preferred can be selected from the group listed in Table IV:

Table IV
Preferred Antioxidants

Santowhite Powder®, Monsanto
Santonox R®, Monsanto
Ethanox® 330, Ethyl Corp.
Ethanox® 702, Ethyl Corp.
Vanox® 1290, R.T. Vanderbilt Co.
Ultranox® 246, Borg-Warner Chemicals
Naugard® 451, Uniroyal Chemical Company
Naugard® 445, Uniroyal Chemical Company
Mixxim® AO-30, Fairmount Chemical Co.
Cyanox® 425, American Cyanamid Co.

Santonox R® is particularly preferred. Optionally, oxygen scavengers can be included alone or with the acid scavengers, acid scavengers and antioxidants, or antioxidants. Suitable oxygen scavengers listed in Table V:

Table V

sodium dithionate with calcium hydroxide

ascorbic acid

glucose with alkalies

drying oils (linseed oil)

pyrocatechol

hydrogen gas in the presence of palladium catalyst

ferrous sulfate with dessicants

activated iron powder (accelerated rusting to
   removes $O_2$)

Ageless®

Ridox®

Santonox R® and sodium hydroxide

Preferred oxygen scavengers are Ageless®, Ridox®, and Santonox R® plus sodium hydroxide. Dessicants are also beneficial because of the reduction of moisture in the enclosure. Dessicants can be used alone or in combination with acid scavengers, antioxidants, or oxygen scavengers. Suitable dessicants are Drierite® and the like. The combination of an acid scavenger, such as Ascarite®, and an antioxidant such as Santonox R®, is especially preferred.

An effective amount of acid scavenger is used to retard wire or cable insulation degradation. This is calculated to be an amount equal to or greater than the stochiometric amount of acid scavenger for the amount of vapor or deleterious volatile component given off by the enclosure materials or from air exposure. More specifically, the acid scavenger or mixtures thereof are from about 0.0005 to about 4.0 grams of acid scavenger per gram of cable or wire insulation. Preferably about 0.005 to about 2.0 grams and most preferably about 0.01 to about 1.0 grams acid scavenger per gram cable insulation. Of course, the lower the concentration of deleterious materials in the enclosure, the lower the required concentration of the acid scavenger. Concentrations of antioxidant are from about 0.01 to about 0.5, and preferably about 0.05 to about 0.2 grams antioxidant per gram cable insulation. When employed, oxygen scavengers are present in an amount sufficient to reduce the $O_2$ level in an air-tight sealed enclosure to a level of about 0.1% oxygen.

The acid scavengers as well as the oxygen scavengers and the antioxidants can be incorporated into the closure preferably through a porous laminate on the interior of the closure but also in any suitable gel end pieces and sealing members, or as a separate high concentration block of material capable providing the acid scav-

7

enger so as to create and maintain a substantially acid-free atmosphere in the enclosure. The material can also be incorporated in time release form or any other suitable delivery system. In a further embodiment, the acid scavengers are incorporated into the plastic in the housing at a concentration level of from greater than about 0.2 % by weight to about 30 % by weight, preferably 0.5 % by weight to about 20 % by weight, and most preferably 2 % by weight to about 10 % by weight.

Although the invention functions best in a sealed system, beneficial results may be obtained in closures such as aerial closures or pedestal caps which have limited air circulation. In addition, the invention can be used with both air core cable and blocked or greased-filled cable at the point where the cable is split open exposing the fine individual wires of the larger cable.

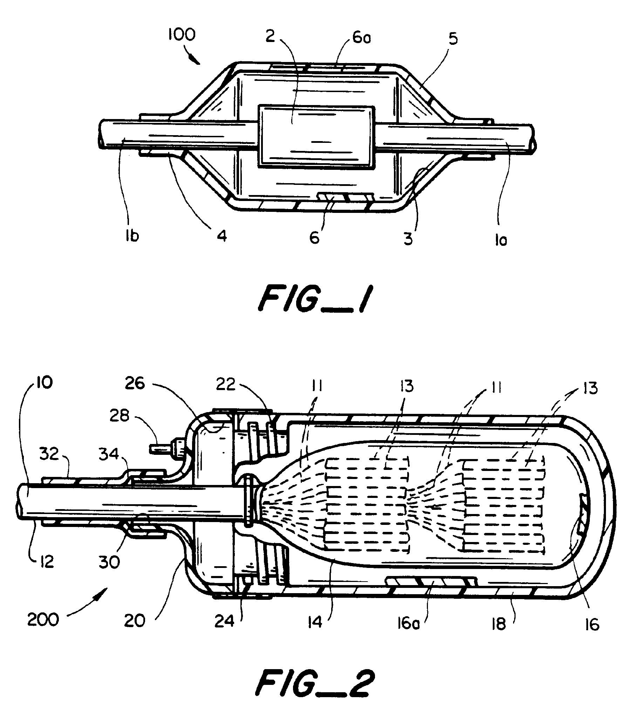

Having described the broadest aspects of the invention, more particular embodiments are illustrated by discussion of the figures. Figure 1 illustrates a recoverable article 100 for encapsulating a cable splice 2. The enclosure 100 includes a recoverable sleeve as taught in U.S. Patent 4,626,458. The Patent specification is completely incorporated herein by reference for all purposes. The enclosure 100 includes a recoverable sleeve 5 alone or with a recoverable fabric surrounding a liner 3. The sleeve 5 is comprised of a material such as a recoverable polyethylene material alone or in a fabric form. The sleeve 5 and the liner 3 protect the cable splice 2. The liner 3 is fabricated from metal, cardboard, polymeric foam material, and the like. The fine wires within the splice 2 are beneficially protected by including an acid scavenger 6 either as a separate member within the liner 3 or incorporated into the sleeve 5 having porous access through liner 3 to the splice 2 of cable 1a and 1b.

Having described the broadest aspects of the invention, more particular embodiments are illustrated by discussion of the figures. Figure 1 illustrates a recoverable article 100 for encapsulating a cable splice 2. The enclosure 100 includes a recoverable sleeve as taught in U.S. Patent 4,626,458. The Patent specification is completely incorporated herein by reference for all purposes. The enclosure 100 includes a recoverable sleeve 5 alone or with a recoverable fabric surrounding a liner 3. The sleeve 5 is comprised of a material such as a recoverable polyethylene material alone or in a fabric form. The sleeve 5 and the liner 3 protect the cable splice 2. The liner 3 is fabricated from metal, cardboard, polymeric foam material, and the like. The fine wires within the splice 2 are beneficially protected by including an acid scavenger 6 either as a separate member within the liner 3 or incorporated into the sleeve 5 having porous access through liner 3 to the splice 2 of cable 1a and 1b.

Although sealed cable closures 100 are used primarily in buried and aerial applications requiring infrequent reentry, occasionally more frequent access to the individual wires in the cable may be required. For these purposes the apparatus illustrated in Figures 2, 3, and 4 are often employed. Figure 2 illustrates an apparatus known as an end cap 200 as described in U.S. Patent 4,379,602, the specification of which is completely incorporated herein by reference for all purposes. A cable 10 having outer insulation 12 is brought into an end piece where the individual conductors 11 are exposed for splicing or separation as illustrated by 13. The fine wires 11 contained in the suitable airtight bag 14 in which optionally the acid scavenger 16 may be incorporated. In other embodiments, the bag 14 may be somewhat permeable which permits the incorporation of the acid scavenger in the interior of the outside of an end cap 18 illustrated as 16a. The end cap 18 is threadedly engaged to a base member 20 by threads 22 and the two pieces are sealed together by tape or a heat-shrinkable polyethylene sealing ring 24. The base 20 has a broader section 26 than the threaded portion 22 to permit the mating of the cap 18 to the base 20. The base 20 includes a valve 28 for pressure testing the device and is affixed to the cable 10 at jacket 12 through a heat-shrinkable sleeve 32 accommodating the narrow end of the base 20 at 30 by a heat-shrinkable fitting 34. Of course, the end cap can be affixed by any other suitable means such as tape but preferably butyl tape rather than polyvinyl chloride tape, or any suitable grommet and gasket arrangement. An additional acid scavenger solution can be sprayed on the fine wires 11. Alternatively, the liner bag 14 can incorporate a suitable layer incorporating a volatile acid scavenger on the interior surface thereof to protect the wires.

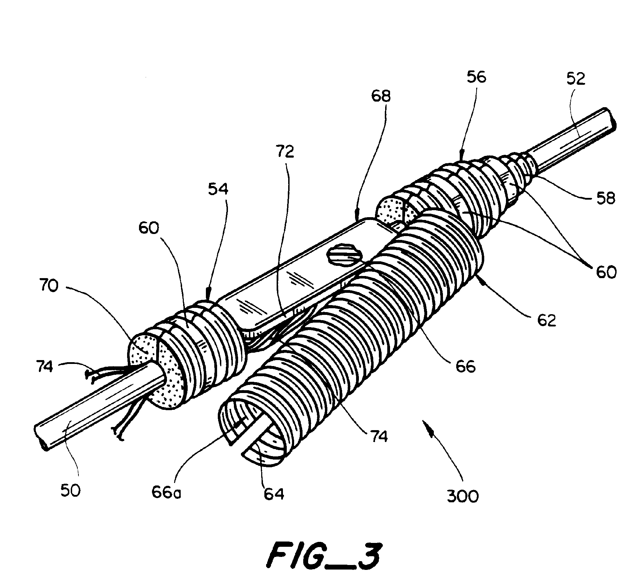

Figure 3 illustrates an aerial closure embodiment of the invention used to splice two cables 50 and 52 together. The cables 50 and 52 are normally spliced together across a cable splice area 68 permitting the drop wire 74 to be withdrawn therefrom. On opposite sides of the splice area the cable includes suitable sealing means 54 and 56 such as gel-filled enclosures as taught in U.S. Patent 4,701,574, the specification of which is completely incorporated herein by reference for all purposes. Optionally, the seals can include a tapered portion 58 and means to maintain sealing gel 70 under compression against the cable within the sealing means 54 such as tie wraps. Between end pieces 54 and 56 will be a corrugated cover 62 split at 64 to permit its spreading and insertion over ends 54 and 56. Although not necessary, the corrugations on 62 match the corrugations on 52 and 54 to help affix the jacket 62 thereto. Optionally, the closure 300 can be fabricated without corrugations and permit a friction fit between pieces 54 and 56. Suitable locking means such as screws or clips are incorporated at the split end 64, not illustrated, to hold the sealing tube 62 in place. The acid scavenger, antioxidant, oxygen scavenger, or mixtures thereof can be sprayed on the inside of the tubular member 62 as illustrated in 66a or presented as a concentrated block of material 66 adjacent the splice area, or built into housing or gel or bond bar jacket. More generally, the acid scavenger or mixture of degradation components can be incorporated anywhere in the closure system provided it provides a source of protection for the wire insulation.

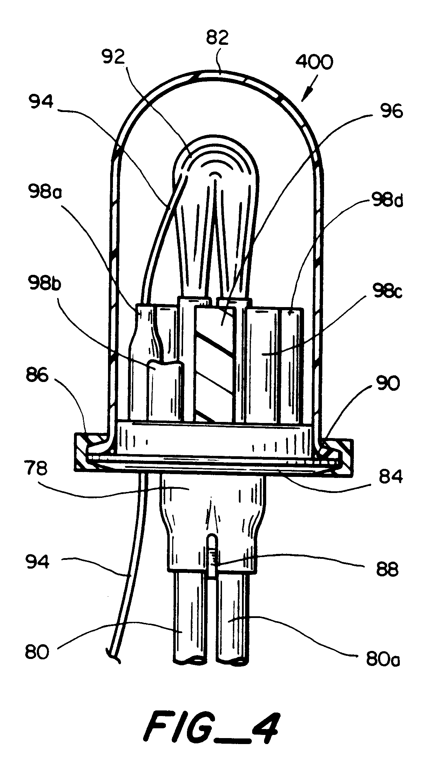

Figure 4 illustrates a pedestal 400 of UK 2,120,486B, used when a cable 80 having a plurality of wires 94 needs constant reentry to add subscribers to the network. The teachings of UK 2,120,468B are completely incorporated herein by reference for all purposes. The cable 80 enters the bottom of the pedestal 84 where the outer sheath is removed to expose inner conductors 92 and is bent around in a u-shaped configuration to exit through the base 84 with cable 80a The cable 80/80a is sealed into the base 84 through a heat-shrinkable plastic or other suitable sealing means 78 including a clip 88 to form a conduit for the bend around cable 80/80a. The base is connected to a reenterable dome 82 by a sealing clamp 86 and o-ring seal 90. From the exposed inner wire in the cable 80 a dropwire 94 exits through a heat-shrinkable member 98a. 98a is in the shrunken sealing configuration as illustrated whereas 98b, c, and d expose shrinkable conduits prior to shrinking.

Incorporated within the closure 400, and forming part of the base member 84 is an appropriately sized block 96 comprising an acid scavenger(s) optionally also including antioxidants oxygen scavengers, dessicants, or mixtures thereof. The composition of the material is selected so as to provide a substantially acid/volatile free atmosphere within the dome closure 82 upon thermal cycling of the pedestal cap 400 due to ambient temperature changes. In selecting the amount of material 96, wire insulation surface area and the number of exposed wires 92 are determined. Preferably, in the closure 400 as well as closures 100, 200, and 300, halogenated materials such as polyvinyl chloride or other sealing materials such as neoprene, DR tape, and silicone sealants less than fully cured are severely limited, or most preferably, excluded from the enclosure. Thus, in a further embodiment of the invention, the lifetime of the polyolefin, e.g., polyethylene, insulated cable can be enhanced by the selection of the materials in the closure which upon degradation do not promote or release acidic vapors or volatile degradation products. Furthermore, the lifetime of the cable insulation can be enhanced by actively treating the components of the closure to provide a basic surface which can neutralize any acidic environments such as smog or materials degradation which occur within the pedestal closure. Suitable materials for this are polyethylene closures and sealing tape such as butyl tape. If curable sealing materials are to be employed, then the materials should be fully cured so that the off-gasing of, for example, acetic acid as in the curing of silicone is minimized or at least calculated to be less than the amount of acid scavenger available to protect the cable insulations.

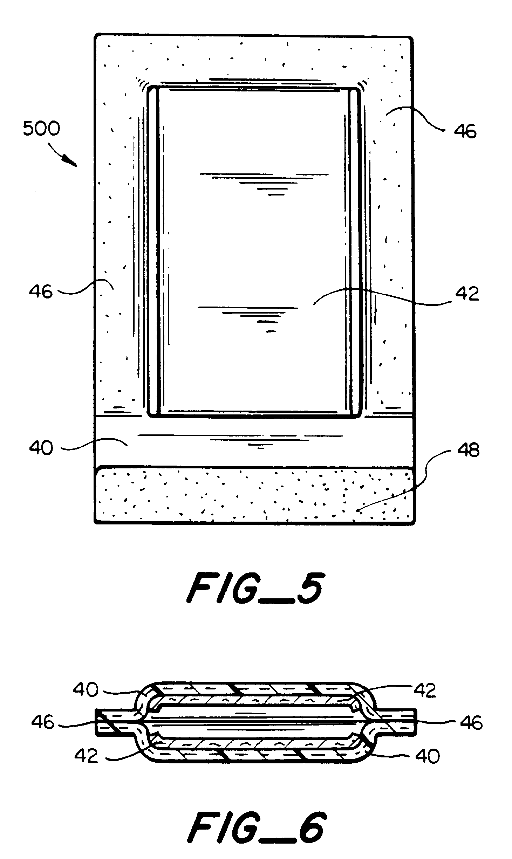

Figures 5 and 6 illustrate preferred liner embodiments suitable for use in telecommunications or electrical enclosures containing polyolefin wires. Preferred enclosure aerial and pedestal systems are disclosed in U.S. Serial No. 254,335 filed October 6, 1988 entitled "Environmental Control Liner For Splice Enclosure," and U.S. Serial No. 354,334 filed October 6, 1988 entitled "Pedestal Telecommunications Terminal Closure With Environmentally Controlled Liner." Both of these applications are incorporated herein by reference for all purposes.

More specifically, Figure 6 is a cross-section of two assembled sheets of Figure 5. Alternatively, Figure 5 edges can be folded over on itself to form Figure 6 instead of employing two Figure 5 sheets. Assembly of the enclosure around a suitably sized mandrel is a preferred fabrication procedure.

The wire or cable sheet enclosure 500 includes a moisture vapor transmission (MVT) sheet 40. Suitable sheets are disclosed in the preceding applications. Generally the sheets include a metallic foil layer attached to or sandwiched between plastic layers. Suitable materials are Mylar®, Valeron® or a layer of nylon, polypropylene, polyethylene, polyester, and the like bonded to a metal foil such as aluminum optionally including an additional layer of plastic bonded to the metal film. The metal film can be any material which prevents the ingress of moisture into the enclosure. In environments where MVT is not critical, the metal layer is optional. The edges of the sheet 40 include a heat sealable material 46 such as the plastic itself or a hot melt adhesive. Cold bonding adhesives such as epoxies, cyanoacrylates, and the like are also suitable. The central region of the sheet 40 contains a suitable material 42 such as and the like, which contains the acid scavenger or acid scavenger along with antioxidants, dessicants, oxygen scavengers, and the like. An acid scavenger-antioxidant combination is, for example, Ca $CO_3$ and Santonox R®, a concentration level of from about 0.01 to about 1.0 grams/sq inch (g/in$^2$) and preferably about 0.01 to about 0.5 g/in$^2$ and most preferably about 0.07 g/in$^2$ ± about o.01 g/in$^2$ and 0.001 g/in$^2$ to about 1.0 g/in$^2$, and preferably about 0.01 g/in$^2$ to about 0.5 g/in$^2$ and most preferably about 0.03 g/in$^2$ ± about 0.01 g/in$^2$, respectively.

The absorbant/adsorbant material 42 is adhered to the layer 40 by any suitable means such as glue, fusing, and the like. Preferred materials are felts. A particularly preferred felt is a polyester felt 1/16″ or less in thickness preferably a 6 dernier 12 oz/sq yard, product number #2205 of Pacific States Felt and Mfg. Co., Inc. Hayward, California. Prior to affixing the felt 42, the material is treated with the acid scavenger or acid scavenger-antioxidant combination from a water or alcohol based slury. The concentration is a function of the volume of polyolefin insulation to be protected.

An edge of the sheet 40 contains a sealing means 48 such as a gel as taught in US patents 4,600,261 or 4,634,207, incorporated herein by reference for all purposes. The sealing gels disclosed in U.S. Serial No.s 254,335 and 254,334 are also suitable. The sealing edge 48 seals around the wires or cable in a reusable fashion Of course glues or mastics are suitable if reenterability is not desired.

Upon completion, the sheet 40 is either folded over to seal and form a bag like enclosure or sealed to a similar sheet so that the felt 42 of one sheet faces the felt of the other sheet. If the outer enclosure 100, 200, 300, 400, and the like provided sufficient protection then the bag can be formed solely of the impregnated felt 42 and without sheet 40. A further embodiment of this aspect of the invention provides for tubular sections of treated material to surround wires such as PVC drop wires. Since may fire codes require the use of fire retardant wires from the terminal to the hook-up point, i.e., house, an impregnated felt surrounding the portion of the PVC wire in the enclosure provides enhanced protection from the off-gassing of deleterious volatiles such as HCl. Additionally, treated felt tapes are suitable to wrap exposed wires.

The absorbant/adsorbant material is treated with a slurry of acid scavenger or preferably an acid scavenger/antioxidant mixture. A preferred treatment process comprises disolving 1 part antioxidant, e.g., Santonox R® in from about 4 to 50 parts and preferably about 30 parts alcohol, e.g., methanol, ethanol, isopropyl, and the like. This mixture is slurried with 1 part acid scavenger, e.g., calcium carbonate ($Ca\ CO_3$) to from about 5 parts to about 25 parts and preferably 14 parts alcohol/ antioxidant solution. Thereafter the felt is exposed to and preferably saturated with the slurry. This takes from about 1 to about 30 seconds and preferably about 4 to 5 seconds. Finally, the felt is air dried or preferably oven dried at greater than about 80°C and preferably greater than about 110°C.

Unexpectedly, the antioxidant acts as a binder for the acid scavenger. More specifically, the Santonox R® evidently holds the $Ca\ CO_3$ within the felt because unlike felts treated with only $Ca\ CO_3$, $Ca\ CO_3$ dust is not as prevalent.

Example 1

Samples of Polyvinyl Chloride (PVC) materials weighing 0.5 grams were placed in glass bottles sealed by a cap from which hung an approximately 2-inch sample of an insulated copper wire conductor. A suitable bottle is a two-ounce size flint glass bottle covered with aluminum foil and then capped with an aluminum foil lined phenolic resin screw-on cap (Fisher Scientific, Inc., Catalog No. 03-320-21C). The samples in bottles were placed into a circulating air oven at 90°C for aging. An unsealed, otherwise identical control sample was also hung in the oven at the same temperature.

Oxidation Induction Time (O.I.T.) of the polyolefin insulations was measured as described in Bellcore Technical Advisory No. TA-TSY-000421; September 1988 except that aluminum sample pans were used for both Foam-Skin and solid insulations. The O.I.T. was measured as the time, in minutes, to exotherm in pure oxygen at 200°C.

For samples with solid high density polyethylene insulation (HDPE), the initial O.I.T. prior to aging was determined to be 150 ± 7 minutes. After 8 weeks, 12 weeks, and 16 weeks at 90°C, samples were measured and the results are shown in Table 1. Samples of foam-skin HDPE insulation were also tested, and measured after two weeks with the initial O.I.T. being 14 ± 1 minute in this case. Prior to aging the foam-skin insulations, the filling compound was removed by wiping with a clean paper towel.

TABLE 1

| Sample | O.I.T. (Solid Insulation)[1] @ 90°C | | | O.I.T. (Foam-Skin Insulation)[4] 2 wks @ 90°C |
|---|---|---|---|---|
| | 8 wks | 12 wks | 16 wks | |
| Control Insulated Wire (not in bottle) | 105 | 102 | 101 | 9.9 |
| PVC Tape [2] | 97 | 87 | 43 | 6.4 |
| PVC Film [3] | 23 | 4 | <1 | 2.6 |
| Unstabilized PVC [5] | 38 | 5 | <1 | - |
| Pedestal PVC [6] | 90 | 86 | 63 | - |
| 1 drop of concentrated HCl solution; 38% | - | - | - | 0.5* |

(1) AT&T BKMA-100, 1988 (date code WE-P-11-88)
(2) 3M Corporation, Type 88T Black PVC Electrical Tape.
(3) PVC film brand is 3 mil thick. U.E. Tape supplied by Michael J. Arnold Co.; typically used for wrapping telecommunications splices.
(4) AT&T AFMW-200, 1984 (date code WE-A-6-84). Cable Reel had four years of outside storage at the Fuquay-Varina, NC plant outside cable storage yard.
(5) Sample of PVC polymer of 110,000 molecular weight supplied by Polysciences, Inc. (catalog No. 9708).
(6) Pedestal PVC is from a Pedlock pedestal closure manufactured by Coil Sales, Inc.

*After only 2-days aging at 90°C.

This Example demonstrates the adverse effects of exposure to PVC at temperatures of only 90°C on HDPE.

Example 2

The experiment of Example 1 was repeated to examine a range of other materials besides PVC-type materials. The O.I.T. was measured on solid HDPE insulation after exposure in sealed bottles to 0.5 gram samples of the various materials. The samples were aged for 5 weeks at 90°C. The initial O.I.T. of the insulation is 150 ± 7 minutes. The results are shown in Table 2.

TABLE 2

| Sample | O.I.T. Solid Insulation[1] 5 wks @ 90°C |
|---|---|
| Control (in sealed bottle) | 131 |
| EPDM Foam [2] | 83 |
| PVC film as before | 60 |
| Silicone RTV sealant [3] | 40 |
| Neoprene rubber [4] | 82 |
| 3M SLIC Closure End Piece [5] | 64 |
| Neoprene Tape [6] | 46 |
| Neoprene Foam [7] | 5 |
| DR Tape [8] | 9 |
| Epichlorohydrin Mastic Sealant [9] | 4 |
| 3M Slic Closure Bond Bar Insulation [5] | < 1 |

[1] HDPE solid insulation; AT&T BKMA-100, 1988
[2] EPDM foam supplied by CGR Products, Inc., Greensboro, NC; Type No. 1763
[3] Silicone RTV sealant is General Electric 1000 cs/1001 type contractor's sealant; cured for two days at room temperature before placing in bottle.
[4] Neoprene rubber supplied by McMaster Supply Co., Catalog No. 8568K14, commercial grade Neoprene rubber sheet.
[5] End Piece and Bond Bar Insulation are rubber materials removed from a 3M Corporation SLIC-type telecommunications splice closure.
[6] Neoprene tape is supplied by Plymouth Rubber Company, Inc.; Plytuff LN Neoprene Tape.
[7] Neoprene foam; CGR Products, Inc., Type 1743.
[8] DR tape is supplied by Plymouth Rubber Company, Inc. (DR tape is widely used for electrical insulation in telecommunications.)
[9] Raychem S1189 (Epichlorohydrin Mastic Sealant)

These results demonstrate the detrimental effects of exposure to acid or volatile vapor exposure on the cable wire insulation O.I.T. resistance.

Example 3

A similar experiment to Example 1 was conducted for Polyvinylidene chloride films such as Saran® is presented in Table 3.

TABLE 3

| Sample | Insulation O.I.T. Min @ 200°C After 90°C Aging | | | | | | |
|---|---|---|---|---|---|---|---|
| | 1 wk | 2 wks | 4 wks | 6 wks | 8 wks | 12 wks | 16 wks |
| Control (in sealed bottle) | 111 | 115 | 109 | 119 | 124 | 102 | 107 |
| Saran Film* | 76 | 51 | 4 | 4 | 1.5 | <1 | <1 |

*Saran Film is Dow Chemical's SaranWrap 3HY Plastic Wrap, Dow No. 4081733.

This demonstrates the degradative effects of halogenated polymers other than PVC on wire insulation oxidative stability.

Example 4

The experiment in Example 1 was repeated, one bottle with the PVC additionally contained an acid scavenger (Ascarite® II)[1]. The results are shown in Table 4. Solid HDPE insulation was tested (AT&T BKMA-100, 1988).

TABLE 4

| Sample | O.I.T. (4 wks @ 90°C) | O.I.T. (8 wks @ 90°C) | O.I.T. (16 wks @ 90°C) |
|---|---|---|---|
| Control (sealed bottle) | 109 | 119 | 107 |
| PVC [2] | 93 | 87 | 43 |
| PVC-acid scavenger [1] | 110 | 121 | 106 |

(1) Ascarite® II, Thomas Scientific, Inc. (Sodium hydroxide on expanded Mica); 5 grams were placed in each bottle.
(2) PVC is 3M 88T Black PVC Electrical Tape; 0.5 grams were placed in each bottle.

The results illustrate the beneficial effects of acid scavengers in protecting HDPE cable insulation from the degradative effect of exposure to PVC at 90°C.

Example 5

To demonstrate that the degradative effect of HCl does not depend on the presence of $O_2$, samples of foam-skin insulation[1] were evaluated in both air and nitrogen similar to Examples 1, 2, 3, and 4. Measurements were taken after 2 days aging at 90°C, and are shown in Table 5.

## TABLE 5

| Sample | O.I.T.<br>(2 days @ 90°C) |
|---|---|
| Unaged insulated wire | 12.9 $\pm$ 1.0 |
| Aged in air | 11.3 $\pm$ 1.0 |
| Aged in nitrogen | 14.9 $\pm$ 2.0 |
| Aged in air with 1 drop<br>    concentrated HCl solution | 0.5 $\pm$ 0.2 |
| Aged in Nitrogen with 1 drop<br>    concentrated HCl solution | 2.7 $\pm$ 1.0 |

---

[1] Insulation is AT&T AFMW-200, 1984 from Example 1

These results indicate the rapid loss of insulation oxidative stability in an inert atmosphere which indicates that the degradation of stability still occurs, essentially as rapidly, in the absence of oxygen.

Example 6

Experiments were performed on solid HDPE insulation, AT&T BKMA-100, 1988, i.e., unfilled insulated wire and incorporating acid scavenger and antioxidant in a protective package. The samples evaluated were different telecommunications closures, with the insulation placed inside in a normal telephone cable splice arrangement. The samples were aged at 110°C for 4 weeks. The initial O.I.T. was 149 ± 4 minutes @ 200°C. The results are given in Table 6. The strippability index was also measured to evaluate adhesion of the insulation to the upper conductor. This was determined according to the following procedure:
- A 3″ long piece of insulation with conductor is removed from desired sample after aging.
- Into the upper jaw of a tensile test machine is placed a 24-gauge wire stripper (modified to fit the jaw). (Available from Harris Corporation, Dracon Division.)
- At ½″ from the end of the conductor, the insulation is slipped into the stripping notch of the stripper.
- The tensile testing machine is pulled at a cross-head speed of 50 mm/min.
- Rapid buildup of force, then rapid loss indicates good strippability, i.e., low adhesion to copper.
- Rapid buildup of force, then prolonged fluctuating high force (caused by abrasive cutting of insulation by stripper) indicates poor stripping.

For samples with a protective package, the protective materials were placed in a heat-sealed Tyvek[2] Pouch. Tyvek® is a non-woven polyethylene fabric supplied by Dupont. 10 grams of Santonox R® was used as the antioxidant. 20 grams of Ascarite® II was used as the acid scavenger. For samples containing both antioxidant and acid scavenger, both materials were mixed in one Tyvek® Pouch. Separate silica gel dessicant pouches were included as indicated in the sample descriptions, i.e., two 15 grams dessicant pouches in each closure. The Silica gel dessicant pouches were products of Multiform Dessicants, Inc.

TABLE 6

| Sample | O.I.T. After Aging (4 wks @ 110°C) (min @ 200°C) | Strippability |
|---|---|---|
| Exposed Insulation (Jacket removed from cable) | 113 | Good |
| Sealed Insulation (Jacket of cable intact, ends sealed) | 115 | Good |
| Heat-shrink Sealed Closure with PVC Tape, Antioxidant and Dessicant | 121 | Poor |
| Heat-shrink Sealed Closure with PVC Tape, Antioxidant, Acid Scavenger, and Dessicant | 173 | Good |
| Heat-shrink Sealed Closure with PVC Tape and Dessicant | 96 | Poor |
| AT&T Type 18A free-breathing closure with flexible PVC body | 78 | Poor |
| 3M A2-RB free-breathing closure with rigid PVC body | 23 | Poor |
| Reliable Electric 400-0 free-breathing closure with flexible Neoprene rubber body | 50 | Poor |
| Raychem TRAC A free-breathing closure with polyolefin body | 113 | Good |
| 3M PST #4634 sealed pedestal closure (with PVC tape and PVC film) | 38 | Poor |
| Raychem Pedcap RM-3 sealed pedestal closure (with PVC tape, antioxidant, acid scavenger, and dessicant) | 117 | Good |
| Coil Sales, Inc. CPLG-6 free-breathing pedestal (with rigid PVC body) | 1 | Poor |

This demonstrates the benefits derived from the use of nonhalogenated closure systems and the beneficial effects of a combined acid scavenger, antioxidant and dessicant system. To maintain effective strippability of copper wire, an acid scavenger is beneficial.

Example 7

An experiment similar to Example 1 was conducted on foam-skin cleaned wire insulation in the presence of greater than about 90% relative humidity. The specific wire was AT&T AFMW-100, 1988 (date code WE-AK-11-88). The cable reel containing the wire was placed in an oven at about 60°C for about 4 weeks to allow filling compound to extract antioxidant from the interior wire. Thereafter wire samples were exposed to the environments in Table 7.

## TABLE 7

| Sample | O.I.T. @ 90°C | | |
|---|---|---|---|
| | 1 wk | 2 wk | 3 wk |
| Unaged control[1] | 45.0 ± 4 | 45.0 ± 4 | 45.0 ± 4 |
| Aged control with dessicant[2] | 44.5 ± 3.5 | 38.0 + 3.5 | 41.4 ± 2.7 |
| Distilled water (humidity)[3] (not in contact with wire) | 31.0 ± 1.7 | 16.7 ± 1.3 | 13.9 ± 1.2 |

(1) Unaged control O.I.T. is measured after cable conditioning of 4 weeks at 60°C.

(2) 5 grams of silica gel dessicant used.

(3) 5 grams of distilled deionized water.

The results indicate the effectiveness of dessicant in maintaining an O.I.T. value. The results also indicate the reduction of O.I.T. after exposure to a humid atmosphere.

## Example 8

A series of six PVC pedestal samples were constructed and placed into a 110°C circulating air oven for four weeks. Inside each pedestal was placed an exposed telephone cable looped to simulate a cable splice. The cable was an AT&T BKMA-100 with solid HDPE insulation having an unaged O.I.T. of 154 ± 6 min.

The sample configurations were varied with and without Pedcap RE-3 closures and acid scavenger/antioxidant packages. The acid scavenger/antioxidant packages were sealed Tyvek pouches with 30 grams Ascarite and 10 grams Santonox R. Sample descriptions are further indicated in Table 8.

After oven aging, four of the pedestals were subjected to a draeger gas analysis test to determine the presence/absence of HCl gas. A suitable detector tube is available from Lab Safety Supply Company, Catalog No. EB-4629. The tube is a glass ampule manufactured by National Draeger Co., which contains a color indicator that detects HCl gas in the 1 to 25 parts per million (ppm) range. Typically, both ends of the tubular ampule are broken, and one end is inserted into a hand-activated bellows suction air pump. To measure HCl gas, air is sucked through the tube by the pump with a fixed-number of pump strokes which is required to accurately record the HCl concentration. A color change from blue to yellow indicates presence of HCl. The length of color change along the length of the tube indicates the HCl concentration.

To measure HCl in the pedestal, it was necessary to drill a hole in the sample immediately after removing from the aging oven. Through this hole, any HCl could be measured. For samples with Pedcaps, HCl was measured both outside and inside the Pedcap.

Results for the HCl detection test are listed below with O.I.T. results for the insulation after aging. O.I.T. samples were removed from the top, center, and bottom of the splices.

TABLE 8

| Sample | Sample Configuration | O.I.T. (Min @ 200°C) | | | HCl Gas Level (PPM) |
|---|---|---|---|---|---|
| | | Top | Center | Bottom | |
| 1 | PVC Pedestal(1) | 2 | 1 | 1 | 6 |
| 2 | PVC Pedestal(1) | 3 | 1 | 4 | 5 |
| 3 | PVC Pedestal with Pedcap® closure containing the acid scavenger and antioxidant around the cable splice | 124 | 108 | 133 | 8 outside Pedcap <1 Inside Pedcap |
| 4 | PVC Pedestal with Pedcap® closure containing the acid scavenger and antioxidant around the cable splice | 99 | 122 | 113 | Not Measured |
| 5 | PVC Pedestal with an inside Pedcap® closure around the cable splice | 121 | 118 | 113 | 3 outside Pedcap <1 Inside Pedcap |
| 6 | PVC Pedestal with an inside Pedcap® closure around the cable splice | 84 | 1 | 1(2) | Not Measured |

(1) PVC Pedestal is manufactured by Coil Sales Inc., Pedlock CPLG-4-pedestal

(2) This sample had excessive flow of the mastic sealant used to seal the bottom of the Pedcap® dome. This resulted in exposing the splice atmosphere to the DR tape's volatile by products. This tape is typically used during the product installation. DR tape affects insulation stability as illustrated by Example 2.

These O.I.T. results indicate the beneficial effect of using polyolefin interior enclosures and well as using antioxidant and acid scavengers in PVC pedestal closures.

Example 9

An experiment similar to Examples 1 and 6 was performed however, insulations with and without copper conductor were aged at 90°C for 8 weeks. The insulation was solid HDPE (AT&T BKMA-100, 1988) with an unaged O.I.T. of 154 ± 5 min. Results are listed in Table 9.

TABLE 9

Insulation O.I.T. (Min @ 200°C)
after 8 wks @ 90°C

| Sample | Copper Wire Not Removed Before Aging | Copper Wire Removed Before Aging |
|---|---|---|
| Control[1] (with dessicant) | 122 | 104 |
| PVC Film[2] (with dessicant) | 43 | 81 |
| Control[3] (with humidity) | 125 | 110 |
| PVC Film (with humidity) | 4 | 66 |

(1) 5 grams of silica gel dessicant placed in bottle
(2) U.E. Tape supplied by Michael J. Arnold Co.
(3) 5 grams distilled deionized water placed in bottle
    (insulation does not touch water).

This demonstrates the deleterious effects of PVC on wire insulation oxidative stability is increased in the presence of humidity and in the presence of the core copper wire.

Example 10

In this experiment, a pedestal closure, Pedcap RM-3® closure, was installed over a telephone cable looped to simulate a cable splice. The cable was a filled foam-skin, 100 pair cable (AT&T AFMW-100, with about 6 feet of the cable exposed to the air outside the pedestal closure. The exposed cut ends were covered with a heat-shrinkable cap, VAAC-200®, and a pinhole was made in the cap to allow free air exchange up the cable length.

Prior to installing the pedestal closure, an oxygen gas sensor was inserted inside the pedestal closure near the splice area. The oxygen sensor electrical cable was embedded in the mastic seal of the closure to prevent gas leaks up the sensor cable. The oxygen content inside the sealed pedestal closure could be measured with a digital monitor located outside the closure. A suitable sensor/ monitor is model GC-301, manufactured by G.C. Industries.

Also prior to installing the pedestal closure, an oxygen scavenger was placed near the splice area. Six packages of Ageless Z-500 available from Misubishi Gas Chemicals were used as the oxygen scavenger. Each individual scavenger package is capable of absorbing at least 500 cc. of pure oxygen, so, that the total oxygen absorption capacity inside the closure was about 3 liters of pure oxygen. Since oxygen is only about 20% of the earth's atmosphere, the oxygen scavenger used could remove the oxygen from about 15 liters of air. The capacity of a Pedcap RM-3® is only a few liters, there was encough oxygen scavenger used to absorb substantially all the $O_2$ in the closure.

Immediately after sealing the closure with internal oxygen scavenger and oxygen monitor, the oxygen level was measured versus time. Data for oxygen level is listed in Table 10:

## Table 10

| Elapsed Time (hours) | % Oxygen Measured Inside Pedestal Closure |
|---|---|
| 0 | 20.9% |
| 1 | 6.5% |
| 2 | 2.0% |
| 3 | 0.7% |
| 4 | 0.1% |
| 5 | 0.1% |
| 24 | <0.1% |

Since 0.1% oxygen is the lowest oxygen concentration that the sensor used could measure, the actual oxygen concentration could have been less than 0.1% after 24 hours.

This data demonstrates the ability of oxygen scavengers to remove oxygen from sealed pedestal closures with filled telephone cables.

Example 11

A sample of 20 grams of PVC film, U.E. Tape (see footnote 3 of Table 1), was placed in a 50 ml stoppered flask having an inlet and outlet. The flask was placed in a constant temperature water bath at 60°C.. Air was circulated through the flask and over the sample and thereafter passed through a slightly alkaline solution of distilled water with sodium hydroxide for about eight weeks.

An analysis of the water after about eight weeks showed the presence of chloride ions while no chloride ions were detected in a control sample. This demonstrates the degradation of PVC to give HCl gas at only 60°C. (A temperature that is known to occur in above ground telephone enclosures.)

**Claims**

1. A method for preventing degradation of polyolefin wire insulation (1a, 1b, 12, 50, 52, 80, 89) in a cable splice which comprises:
   surrounding a cable splice (2) with an enclosure (100, 200, 300, 450) characterised in that the method further provides
   an acid scavenger (6, 16, 16a, 66, 66a, 96) separate from but in communication with the insulation; and optionally sealing the enclosure (100, 200, 300, 450) around the cable splice (2).

2. The method according to claim 1 characterised in that the enclosure is fabricated from a nonhalogenated plastic.

3. The method according to Claim 1 or 2, characterised by further providing a dessicant within the enclosure.

4. The method according to claim 1, 2 or 3, characterised in that the acid scavenger comprises a metallic oxide, metallic carbonate, metallic hydroxide, organic amine, inorganic amine, organic epoxide, or a basic organic or inorganic salt.

5. The method according to Claim 4, characterised in that the acid scavenger comprises zinc oxide, calcium oxide, lime, dibasic lead phthalate, sodium carbonate, calcium carbonate, sodium hydroxide, sodium bicarbonate, calcium hydroxide, ammonia, an amine, an epoxy compound, epoxidized soybean oil, barium stearate, cadmium stearate, zinc stearate, barium carboxylate, cadium carboxylate, zinc carboxylate, dibasic lead phosphite, tribasic lead sulphate, sodium phosphate, or dialkyl tinidichloride.

6. The method according to any preceding Claim, further characterised by providing an antioxidant together with the acid scavenger.

7. The method according to Claim 6, characterised in that the antioxidant is selected from the group consisting of tris (3,5-di-tert-butyl-4-hydroxybenzyl)isocyanurate; tetrakis [(methylene 3-(3′,5′,-di-tibutyl-4′-hydroxyphenyl)] propionate methane; octadecyl 3-(3′,5′,-di-tert-butyl-4′-hydroxyphenyl) propionate; 4,4′ thiobis-(6-tert-butyl meta cresol); 4,4′-butylidene bis (6-tert-butyl meta cresol); 1,3,5-trimethyl-2,4,6-tris (3,5,-di-tert-butyl-4-hydroxybenzyl) benzene; 2,2′-Ethylidene-bis (4,6-di-tert-butyl phenol); 2,2′-methylene-bis-(4-methyl-6-tert-butyl phenol); 4,4′ Di (alpha,alphadimethylbenzyl)diphenylamine; 1,1,3-tris(2 methyl)-4-hydroxy-5-tert-butylphenyl butane; 2,2′ Methylene bis(4-ethyl-6-tert-butyl phenol); 4,4′-methylene-bis -(2,6-di-tert-butylphenol)1; or alkylated hydroquinone.

8. The method according to any preceding claim, characterised in that the method further comprises adding an oxygen scavenger.

9. The method according to claim 8, characterised in that the oxygen scavenger is present in an amount sufficient to reduce the oxygen content of the closed enclosure to about 0.1% oxygen.

10. A method according to any preceding claim, characterised in that the acid scavenger is provided in the form of an aerosol spray, a package of acid scavenger, a liner coated with acid scavenger, a block of acid scavenger, a felt bag treated with an acid scavenger and optionally an antioxidant, a felt tube treated with an acid scavenger and optionally an antioxidant, a felt sheet treated with an acid scavenger and optionally an antioxidant, or an encapsulated acid scavenger released over time and/or temperature or both, or a combination thereof.

11. An apparatus for enclosing insulated polyolefin wires of a cable splice (2) characterised by having therein an acid scavenger (6, 16, 16a, 96) to retard polyolefin wire insulation degradation, which when the apparatus is used to enclose insulated polyolefin wires is separate from but in communication with the polyolefin insulation.

12. An apparatus according to claim 11, wherein the acid scavenger is as defined in claim 4 or 5.

13. An apparatus according to Claim 11 or Claim 12 characterised in that the acid scavenger is in the form of an aerosol spray, a package of acid scavenger, a liner coated with acid scavenger, a block of acid scavenger, a gel including acid scavenger, a felt bag treated with an acid scavenger, a felt tube treated with an acid scavenger, a felt tape treated with an acid scavenger, a felt sheet treated with an acid scavenger, an encapsulated acid scavenger released over time and/or temperature.

14. An apparatus according to claim 13, provided together with an antioxidant.

15. A kit-of-parts for enclosing insulated polyolefin wires in a cable splice comprising:
a splice enclosure (100, 200, 300, 400); characterised by further providing
an acid scavenger (6, 16, 16a, 66, 66a, 96) to inhibit the degradation of the polyolefin wire insulation by degrading acid moities, which when the kit is used to enclose insulated polyolefin wires is separate from but in communication with the polyolefin insulation.

16. The kit according to Claim 15, further comprising an antioxidant.

17. The kit according to Claim 15 or 16, characterised in that the acid scavenger is provided as a felt material (42) treated with the acid scavenger.

18. The kit according to Claim 17, characterised in that the felt (42) is enclosed in a moisture vapour transmission bag 500 which adheres to a side of the felt (42) opposite to a side thereof adapted to be in communication with polyolefin of the wires and cable.

19. The kit according to Claim 17 or Claim 18, characterised in that the felt material (42) has a concentration of acid scavenger of from 0.0062 to 6.3 $g/cm^2$ (about 0.001 to 1.0 $g/in^2$) adsorbed or absorbed into or onto the felt.

20. The kit according to claim 19, further including an antioxidant absorbed or adsorbed onto or into the felt in an amount of from 0.0062 to 6.3 $g/cm^2$ (about 0.001 to 1.0 $g/in^2$).

**Patentansprüche**

1. Verfahren, um den Abbau von Polyolefin-Drahtisolierung (1a, 1b, 12, 50, 52, 80, 89) in einem Kabelspleiß zu verhindern, wobei das Verfahren die folgenden Schritte aufweist:
Umgeben eines Kabelspleißes (2) mit einer Umschließung (100, 200, 300, 450), dadurch gekennzeichnet, daß das Verfahren ferner aufweist:
einen Säurefänger (6, 16, 16a, 66, 66a, 96a) getrennt von der Isolierung, jedoch damit in Verbindung ist; und fakultativ das Abdichten der Umschließung (100, 200, 300, 450) um den Kabelspleiß (2) herum.

2. Verfahren nach Anspruch 1, dadurch gekennzeichnet, daß die Umschließung aus einem nichthalogenierten Kunststoff hergestellt ist.

3. Verfahren nach Anspruch 1 oder 2, dadurch gekennzeichnet, daß außerdem ein Trockenmittel in der Umschließung vorgesehen wird.

4. Verfahren nach Anspruch 1, 2 oder 3, dadurch gekennzeichnet, daß der Säurefänger aufweist: ein metallisches Oxid, metallisches Carbonat, metallisches Hydroxid, organisches Amin, anorganisches Amin, organisches Epoxid oder ein basisches organisches oder anorganisches Salz.

5. Verfahren nach Anspruch 4, dadurch gekennzeichnet, daß der Säurefänger aufweist: Zinkoxid, Calciumoxid, Kalk, zweibasisches Bleiphthalat, Natriumcarbonat, Calciumcarbonat, Natriumhydroxid, Natriumhydrogencarbonat, Calciumhydroxid, Ammoniak, ein Amin, eine Epoxidverbindung, epoxidiertes Sojaöl, Bariumstearat, Cadmiumstearat, Zinkstearat, Bariumcarboxylat, Cadmiumcarboxylat, Zinkcarboxylat, zweibasisches Bleiphosphit, dreibasisches Bleisulfat, Natriumphosphat oder Dialkylzinndichlorid.

6. Verfahren nach einem der vorhergehenden Ansprüche, ferner gekennzeichnet durch Vorsehen eines Antioxidans gemeinsam mit dem Säurefänger.

7. Verfahren nach Anspruch 6, dadurch gekennzeichnet, daß das Antioxidans aus der Gruppe ausgewählt ist, die besteht aus Tris(3,5-di-tert.-butyl-4-hydroxybenzyl)isocyanurat; Tetrakis[(methylen-3-(3',5'-di-t-butyl-4'-hydroxyphenyl)]propionatmethan; Octadecyl-3-(3',5'-di-tert.-butyl-4'-hydroxyphenyl)propionat; 4,4'-Thiobis-(6-tert.-butylmetacresol); 4,4'-butylidenbis(6-tert.-butylmetacresol); 1,3,5-Trimethyl-2,4,6-tris(3,5-di-tert.-butyl-4-hydroxybenzyl)benzol; 2,2'-Ethylidenbis(4,6-di-tert.-butylphenol); 2,2'-Methylenbis(4-methyl-6-tert.-butylphenol); 4,4'-Di-(alpha,alpha-dimethylbenzyl)diphenylamin; 1,1,3-Tris(2-methyl)-4-hydroxy-5-tert.-butylphenylbutan; 2,2'-Methylenbis(4-ethyl-6-tert.-butylphenol); 4,4'-Methylenbis(2,6-di-tert.-butylphenol)1; oder alkyliertes Hydrochinon.

8. Verfahren nach einem der vorhergehenden Ansprüche, dadurch gekennzeichnet, daß das Verfahren ferner das Hinzufügen eines Sauerstoffaufnehmers aufweist.

9. Verfahren nach Anspruch 8, dadurch gekennzeichnet, daß der Sauerstoffaufnehmer in einer Menge anwesend ist, die ausreicht, um den Sauerstoffgehalt der geschlossenen Umschließung auf ca. 0,1 % Sauerstoff zu verringern.

10. Verfahren nach einem der vorhergehenden Ansprüche, dadurch gekennzeichnet, daß der Säurefänger vorgesehen ist in Form eines Aerosolsprays, einer Säurefängerpackung, einer mit Säurefänger beschichteten Auskleidung, eines Säurefängerblocks, eines mit einem Säurefänger und fakultativ einem Antioxidans behandelten Filzbeutels, eines mit einem Säurefänger und fakultativ einem Antioxidans behandelten Filzschlauchs, eines mit einem Säurefänger und fakultativ einem Antioxidans behandelten Filzflächenkörpers oder eines eingekapselten Säurefängers, der mit der Zeit und/oder Temperatur oder beidem freigesetzt wird, oder einer Kombination davon.

11. Vorrichtung zum Umschließen von isolierten Polyolefindrähten eines Kabelspleißes (2), dadurch gekennzeichnet, daß sie einen Säurefänger (6, 16, 16a, 96) darin hat, um den Abbau der Polyolefin-Drahtisolierung zu verzögern, wobei, wenn die Vorrichtung verwendet wird, um isolierte Polyolefindrähte zu umschließen, der Säurefänger von der Polyolefinisolierung getrennt, jedoch damit in Verbindung ist.

12. Vorrichtung nach Anspruch 11, wobei der Säurefänger wie in Anspruch 4 oder 5 definiert ist.

13. Vorrichtung nach Anspruch 11 oder 12, dadurch gekennzeichnet, daß der Säurefänger vorgesehen ist in Form eines Aerosolsprays, einer Säurefängerpackung; einer mit Säurefänger beschichteten Auskleidung, eines Säurefängerblocks, eines Säurefänger enthaltenden Gels, eines mit einem Säurefänger behandelten Filzbeutels, eines mit einem Säurefänger behandelten Filzschlauchs, eines mit einem Säurefänger behandelten Filzbands, eines mit einem Säurefänger behandelten Filzflächenkörpers, eines eingekapselten Säurefängers, der mit der Zeit und/oder Temperatur freigesetzt wird.

14. Vorrichtung nach Anspruch 13, die gemeinsam mit einem Antioxidans vorgesehen ist.

15. Teilesatz zum Umschließen von isolierten Polyolefindrähten in einem Kabelspleiß, wobei der Teilesatz aufweist:
eine Spleißumschließung (100, 200, 300, 400); dadurch gekennzeichnet, daß vorgesehen ist:
ein Säurefänger (6, 16, 16a, 66, 66a, 96), um den Abbau der Polyolefin-Drahtisolierung durch abbauende Säurekomponenten zu hemmen, wobei, wenn der Teilesatz verwendet wird, um isolierte Polyolefindrähte zu umschließen, der Säurefänger von der Polyolefinisolierung getrennt, jedoch damit in Verbindung ist.

16. Teilesatz nach Anspruch 15, der ferner ein Antioxidans aufweist.

17. Teilesatz nach Anspruch 15 oder 16, dadurch gekennzeichnet, daß der Säurefänger als ein Filzmaterial (42), das mit dem Säurefänger behandelt ist, vorgesehen ist.

18. Teilesatz nach Anspruch 17, dadurch gekennzeichnet, daß der Filz (42) in einem wasserdampfdurchlässigen Beutel (500) eingeschlossen ist, der an einer Seite des Filzes (42) haftet, die zu einer Seite davon entgegengesetzt ist, die ausgebildet ist, um mit Polyolefin der Drähte und Kabel in Verbindung zu sein.

19. Teilesatz nach Anspruch 17 oder 18, dadurch gekennzeichnet, daß das Filzmaterial (42)
eine Konzentration von Säurefänger von 0,0062 bis 6,3 g/cm$^2$ (ca. 0,001 bis 1,0 g/in$^2$) hat, der an dem Filz adsorbiert oder darin absorbiert ist.

20. Teilesatz nach Anspruch 19, der ferner ein Antioxidans aufweist, das in einer Menge von 0,0062 bis 6,3 g/cm$^2$ (ca. 0,001 bis 1,0 g/in$^2$) in dem Filz absorbiert oder daran adsorbiert ist.

**Revendications**

1. Procédé pour empêcher la dégradation d'un isolant (1a, 1b, 12, 50, 52, 80, 89) de fil en polyoléfine dans une épissure de câble, qui comprend les étapes dans lesquelles :
on entoure une épissure (2) de câble d'une enceinte (100, 200, 300, 450), le procédé étant caractérisé en ce qu'il utilise en outre un accepteur d'acides (6, 16, 16a, 66, 66a, 96) séparé de l'isolant mais en communication avec lui ; et
on ferme optionnellement de façon étanche l'enceinte (100, 200, 300, 450) autour de l'épissure de câble 2.

2. Procédé selon la revendication 1, caractérisé en ce que l'enceinte est fabriquée en une matière plastique non halogénée.

3. Procédé selon la revendication 1 ou 2, caractérisé en ce que l'on utilise en outre un déshydratant à l'intérieur de l'enceinte.

4. Procédé selon la revendication 1, 2 ou 3, caractérisé en ce que l'accepteur d'acides comprend un oxyde métallique, un carbonate métallique, un hydroxyde métallique, une amine organique, une amine inorganique, un époxyde organique ou un sel basique organique ou inorganique.

5. Procédé selon la revendication 4, caractérisé en ce que l'accepteur d'acides comprend du dioxyde de zinc, de l'oxyde de calcium, de la chaux, du phtalate diacide de plomb, du carbonate de sodium, du carbonate de calcium, de l'hydroxyde de sodium, du bicarbonate de sodium, de l'hydroxyde de calcium, de l'ammoniac, une amine, un composé d'époxy, de l'huile de soja époxydée, du stéarate de baryum, du stéarate de cadmium, du stéarate de zinc, du carboxylate de baryum, du carboxylate de cadmium, du carboxylate de zinc, du phosphite diacide de plomb, du sulfate triacide de plomb, du phosphate de sodium ou du chlorure de dialkyleétain.

**6.** Procédé selon l'une quelconque des revendications précédentes, caractérisé en outre par l'utilisation d'un antioxydant en même temps que l'accepteur d'acides.

**7.** Procédé selon la revendication 6, caractérisé en ce que l'antioxydant est choisi dans le groupe comprenant les tris-(3,5-di-tert-butyl-4-hydroxybenzyl)isocyanurate ; tétrakis-[(méthylène-3-(3′,5′-di-tibutyl-4′-hydroxyphényl)]-propionate-méthane ; octadécyl-3-(3′,5′-di-tert-butyl-4′-hydroxyphényl)propionate ; 4,4′-thiobis-(6-tert-butyl-méta-crésol) ; 4,4′-butylidène-bis-(6-tert-butyl-méta-crésol) ; 1,3,5-triméthyl-2,4,6-tris-(3,5,-di-tert-butyl-4-hydroxybenzyl)-benzène ; 2,2′-éthylidène-bis(4,6-di-tert-butyl-phénol) ; 2,2′-méthylène-bis-(4-méthyl-6-tert-butyl-phénol) ; 4,4′-di(alpha,alpha-diméthylbenzyl)diphénylamine ; 1,1,3-tris(2-méthyl)-4-hydroxy-5-tert-butylphényl-butane ; 2,2′-méthylène-bis(4-éthyl-6-tert-butyl-phénol) ; 4,4′-méthylène-bis-(2,6-di-tert-butylphénol)1 ; ou hydroquinone alkylée.

**8.** Procédé selon l'une quelconque des revendications précédentes, caractérisé en ce qu'il comprend en outre l'addition d'un accepteur d'oxygène.

**9.** Procédé selon la revendication 8, caractérisé en ce que l'accepteur d'oxygène est présent en quantité suffisante pour réduire la teneur en oxygène de l'enceinte fermée à environ 0,1% d'oxygène.

**10.** Procédé selon l'une quelconque des revendications précédentes, caractérisé en ce que l'accepteur d'acide est utilisé sous la forme d'une pulvérisation d'aérosol, d'un module d'un accepteur d'acide, d'un revêtement recouvert d'un accepteur d'acides, d'un bloc d'accepteur d'acides, d'un sachet de feutre traité avec un accepteur d'acides et, optionnellement, un antioxydant, d'un tube de feutre traité avec un accepteur d'acides et optionnellement un antioxydant, une feuille de feutre traitée avec un accepteur d'acides et optionnellement un antioxydant, ou d'un accepteur d'acides encapsulé libéré avec le temps et/ou la température ou les deux, ou une combinaison de ceux-ci.

**11.** Appareil destiné à envelopper des fils isolés par polyoléfine d'une épissure 2 de câble, caractérisé en ce qu'il renferme un accepteur d'acides 6, 16, 16a, 96) destiné à ralentir la dégradation de l'isolant en polyoléfine du fil, qui, lorsque l'appareil est utilisé pour renfermer des fils isolés par polyoléfine, est séparé de l'isolant en polyoléfine, mais en communication avec lui.

**12.** Appareil selon la revendication 11, dans lequel l'accepteur d'acides est tel que défini dans la revendication 4 ou 5.

**13.** Appareil selon la revendication 11 ou la revendication 12, caractérisé en ce que l'accepteur d'acides se présente sous la forme d'une pulvérisation d'aérosol, d'un module d'accepteur d'acides, d'un revêtement recouvert d'un accepteur d'acides, d'un bloc d'accepteur d'acides, d'un gel comprenant un accepteur d'acides, d'un sachet de feutre traité avec un accepteur d'acides, d'un tube de feutre traité avec un accepteur d'acides, d'un ruban de feutre traité avec un accepteur d'acides, d'une feuille de feutre traitée avec un accepteur d'acides, d'un accepteur d'acides encapsulé libéré avec le temps et/ou la température.

**14.** Appareil selon la revendication 13, pourvu en outre d'un antioxydant.

**15.** Lot de pièces pour envelopper un film isolé par une polyoléfine dans une épissure de câble, comportant : une enceinte d'épissure (100, 200, 300, 400) ; caractérisé en qu'il comporte en outre un accepteur d'acides (6, 16, 16a, 66, 66a, 96) destiné à empêcher la dégradation de l'isolant en polyoléfine du fil par dégradation de fractions d'acides qui, lorsque le lot est utilisé pour renfermer des fils isolés par polyoléfine, est séparé de l'isolant en polyoléfine mais est en communication avec lui.

**16.** Lot selon la revendication 15, comportant en outre un antioxydant.

**17.** Lot selon la revendication 15 ou 16, caractérisé en ce que l'accepteur d'acides est prévu sous la forme d'une matière du type feutre (42) traitée avec l'accepteur d'acides.

**18.** Lot selon la revendication 17, caractérisé en ce que le feutre (42) est renfermé dans un sachet (500) de transmission de vapeur qui adhère à un côté du feutre (42) opposé à un côté de celui-ci destiné à être en communication avec une polyoléfine des fils et du câble.

**19.** Lot selon la revendication 17 ou la revendication 18, caractérisé en ce que la matière du type feutre (42) présente une concentration d'accepteur d'acides de 0,0062 à 6,3 g/cm$^2$ (environ 0,001 à 1,0 g/in$^2$) adsor-

bée ou absorbée dans ou sur le feutre.

20. Lot selon la revendication 19, comprenant en outre un antioxydant absorbé ou adsorbé sur ou dans le feutre en quantité de 0,0062 à 6,3 g/cm$^2$ (environ 0,001 à 1,0 g/in$^2$).

FIG_1

FIG_2

*FIG_3*

FIG_4

*FIG_5*

*FIG_6*